# EUROPÄISCHE PATENTSCHRIFT

(11) **EP 1 141 159 B1**
(45) Veröffentlichungstag und Bekanntmachung des Hinweises auf die Patenterteilung: **12.06.2002**
(21) Anmeldenummer: 99956016.2
(22) Anmeldetag: 18.11.1999
(51) Int. Cl.: C09J 109/06, C09J 125/10

(54) **VERWENDUNG VON SCHUTZKOLLOID-STABILISIERTEN VINYLAROMAT-1,3-DIEN-MISCHPOLYMERISATEN ALS KLEBEMITTEL FÜR PORÖSE SUBSTRATE**
USE AS ADHESIVE FOR POROUS SUBSTRATES OF MIXED AROMATIC VINYL-1,3-DIENE POLYMERS STABILIZED BY A PROTECTIVE COLLOID
UTILISATION COMME AGENT ADHESIF POUR SUBSTRATS POREUX DE POLYMERISATS MIXTES CONSTITUES D'AROMATIQUE VINYLIQUE ET DE 1,3-DIENE ET STABILISES PAR UN COLLOIDE DE PROTECTION

(30) Priorität: 24.11.1998 DE 19854236
(43) Veröffentlichungstag der Anmeldung: 10.10.2001
(73) Patentinhaber: Wacker-Chemie GmbH, 81737 München (DE)
(72) Erfinder: MAYER, Theo, D-84387 Julbach (DE); KÖHLER, Thomas, D-84556 Kastl (DE); HÄRZSCHEL, Reinhard, D-84489 Burghausen (DE); WEITZEL, Hans-Peter, D-84571 Reischach (DE); SCHILLING, Bernd, Macungie, PA 18062 (US)
(86) Internationale Anmeldenummer: EP9908871
(87) Internationale Veröffentlichungsnummer: WO0031204

(56) Entgegenhaltungen:
- EP-A- 0 924 241
- WO-A-99/26360
- DE-A- 19 705 753
- CHEMICAL ABSTRACTS, vol. 103, no. 2, 15. Juli 1985 (1985-07-15) Columbus, Ohio, US; abstract no. 7688, XP002132714 & JP 60 009970 A (NIPPON ZEON CO., LTD., JAPAN) 19. Januar 1985 (1985-01-19)
- CHEMICAL ABSTRACTS, vol. 129, no. 11, 14. September 1998 (1998-09-14) Columbus, Ohio, US; abstract no. 136943, XP002132715 & JP 10 195312 A (MITSUI CHEMICALS INC., JAPAN) 28. Juli 1998 (1998-07-28)

## Beschreibung

Die Erfindung betrifft die Verwendung von Schutzkolloid-stabilisierten Vinylaromat-1,3-Dien-Mischpolymerisaten in Form deren wäßriger Polymerdispersionen oder in Wasser redispergierbaren Polymerpulvern als Klebemittel für poröse Substrate.

Aus der WO-A 96/37551 sind Holzklebemittel bekannt, welche aus einem Gemisch eines Hydroxygruppen enthaltenden Polymers, insbesondere Polyvinylalkohol, und einem carboxylsubstituiertem Styrolpolymer, insbesondere Styrol-Butadien-Latex und einem polyfunktionellem Aziridin als Vernetzer für Hydroxy- und Carboxyl-Gruppen bestehen. Bei der Verwendung dieser Polymere als Holzklebmittel besteht jedoch der Nachteil, daß diese auf Grund ihrer hohen Reaktivität im gebrauchsfertigen Zustand nicht als lagerbeständige Einkomponentensysteme verwendet werden können.

Aus der JP-A 1/229085 (Derwent-Abstract AN 89-312288) sind Holzklebmittel bekannt, die sich aus einem Chelatbildner und einem gelösten oder dispergiertem Klebstoff zusammensetzen. Dabei werden besonders Polymerdispersionen auf Basis Vinylacetat, Acrylat oder Styrol-Butadien neben Kondensationsharzen als Klebmittel erwähnt. Diese können gegebenenfalls als Dispergiermittel Polyvinylalkohol enthalten. Als Chelatbildner werden zweibasige Säuren wie Oxal- oder Malonsäure neben Oxocarbonsäuren sowie deren Salzen genannt.

Aus der JP-A 58/162645 (Derwent-Abstract AN 83-805435) sind Klebmittel zum Kleben poröser Materialien, beispielsweise Holz, bekannt. Die Klebmittel bestehen aus einer Mischung einer Vinylacetat-Etyhlen-Copolymerdispersion und eines carboxygruppenmodifizierten Styrol-Butadien-Latex, wobei die genannten Dispersionen durch Emulgatoren stabilisiert werden. Problematisch bei Emulgator-stabilisierten Dispersionen ist deren unbefriedigende Wasserbeständigkeit.

Aus der JP-A 60009970 ist eine Klebemittelzusammensetzung zur Teppichverklebung bekannt, welche zur Vermeidung von Blasenbildung Glycin enthält. Das Bindemittel ist ebenfalls ein emulgatorstabilisierter Latex mit dem Nachteil der unbefriedigenden Wasserbeständigkeit.

Der Erfindung lag somit die Aufgabe zugrunde, Klebmittel zur Verfügung zu stellen, die sich gegenüber den bekannten Klebemitteln für poröse Materialien durch verbesserte Hydrophobizität und Wasserbeständigkeit, bei gleichzeitig guter Lagerbeständigkeit auszeichen.

Gegenstand der Erfindung ist die Verwendung von Schutzkolloid-stabilisierten Vinylaromat-1,3-Dien-Mischpolymerisaten, mit einer Glasübergangstemperatur Tg von -70°C bis +100°C, in Form deren wäßriger Polymerdispersionen oder in Wasser redispergierbaren Polymerpulvern als Klebemittel für poröse Substrate, wobei die Polymerdispersionen und die Polymerpulver durch Emulsionspolymerisation eines Gemisches enthaltend
a) 20 bis 80 Gew.-% eines oder mehrerer Vinylaromaten,
b) 19.9 bis 79.9 Gew.-% eines oder mehrerer 1,3-Diene,
c) 0.1 bis 15 Gew.-% eines oder mehrerer Comonomere aus der Gruppe umfassend N-Methylolacrylamid, N-Methylolmethacrylamid sowie der N-(Alkoxymethyl)-Acrylamide und N-(Alkoxymethyl)-Methacrylamide mit einem C₁- bis C₆-Alkylrest, wobei sich die Angaben in Gew.-% auf 100 Gew.-% aufaddieren,
in Gegenwart von einem oder mehreren Schutzkolloiden und unter Ausschluß von Emulgator, und gegebenenfalls Trocknung der damit erhaltenen wässrigen Polymerdispersion, erhalten werden.

Geeignete Vinylaromaten sind Styrol und Methylstyrol, vorzugsweise wird Styrol copolymerisiert. Beispiele für 1,3-Diene sind 1,3-Butadien und Isopren, bevorzugt wird 1,3-Butadien. Bevorzugte Comonomere c) sind N-Methylolacrylamid (NMA), N-Methylolmethacrylamid (NMMA), N-(Isobutoxymethyl)-Acrylamid (IBMA), N-(Isobutoxymethyl)-Methacrylamid (IBMMA), N-(n-Butoxymethyl)-Acrylamid (NBMA), N-(n-Butoxymethyl)-Methacrylamid (NBMMA). Bevorzugt werden auch Gemische der N-Methylol(meth)acrylamide mit den (N-(Alkoxymethyl)-(Meth)acrylamiden in einem Gewichtsverhältnis von N-Methylol-Verbindung zu N-(Alkoxymethyl)-Verbindung von 10 : 1 bis 1 : 5. Der Anteil an Comonomer c) beträgt vorzugsweise 0.5 bis 5 Gew.-%, bezogen auf das Gesamtgewicht der Comonomere.

Gegebenenfalls können noch bis zu 30 Gew.-%, bezogen auf das Gesamtgewicht der Monomerphase, weitere mit Vinylaromaten und 1,3-Dienen copolymerisierbare Monomere wie Vinylchlorid, (Meth)acrylsäureester von Alkoholen mit 1 bis 15 C-Atomen oder Vinylester von unverzweigten oder verzweigten Carbonsäuren mit 1 bis 15 C-Atomen copolymerisiert sein.

Gegebenenfalls können noch 0.05 bis 10 Gew.-%, bezogen auf das Gesamtgewicht des Monomergemisches, Hilfsmonomere copolymerisiert sein. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -70°C bis +100°C, vorzugsweise -50°C bis +50°C, besonders bevorzugt -20°C bis +20°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Geeignete Schutzkolloide sind beispielsweise Polyvinylalkohole, Polysaccharide in wasserlöslicher Form wie Stärken (Amylose und Amylopectin), modifizierte Stärken wie Stärkeether, beispielsweise Hydroxyalkyletherstärken, Dextrine und Cyclodextrine, Cellulosen und deren Carboxymethyl-, Methyl-, Hydroxyethyl-, Hydroxypropyl-Derivate, Poly(meth)acrylsäure, Poly(meth)acrylamid, Melaminformaldehydsulfonate, Naphthalinformaldehydsulfonate.

Bevorzugt sind Polyvinylalkohole mit einem Hydrolysegrad von 80 bis 95 Mol% und einer Höppleryiskosität, in 4 %-iger wässriger Lösung von 1 bis 30 mPas (Methode nach Höppler bei 20°C, DIN 53015). Geeignet sind auch hydrophob modifizierte Polyvinylalkohole mit einem Hydrolysegrad von 80 bis 95 Mol% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylacetats. Es können auch Gemische der genannten Polyvinylalkohole eingesetzt werden.

Besonders bevorzugt werden die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester von der Fa. Shell unter den Bezeichnungen VeoVa^{R}5, VeoVa^{R}9, VeoVa^{R}10 und Veova^{R}11 angeboten werden. Weitere geeignete Polyvinylalkohole sind teilverseifte, hydrophobierte Polyvinylacetate, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol%, vorzugsweise 85 bis 94 Mol%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol% und einer Höpplerviskosität, in 4 %-iger wässriger Lösung von 2 bis 25 mPas (Methode nach Höppler bei 20°C, DIN 53015) und deren Kombinationen mit den genannten, hydrophob modifizierten Polyvinylestern in einem Gewichtsverhältnis von 10/1 bis 1/10. Die genannten Schutzkolloide sind mittels dem Fachmann bekannter Verfahren zugänglich.

Die Herstellung der schutzkolloidstabilisierten Polymerpulver erfolgt nach dem Emulsionspolymerisationsverfahren, wobei die Polymerisationstemperatur im allgemeinen 40°C bis 100°C, vorzugsweise 60°C bis 90°C beträgt. Üblicherweise wird unter Druck, im allgemeinen zwischen 3 bar und 10 bar, gearbeitet. Die Initiierung der Polymerisation erfolgt mit den für die Emulsionspolymerisation gebräuchlichen Initiatoren oder Redox-Initiator-Kombinationen, beispielsweise Hydroperoxide wie tert.-Butylhydroperoxid, Azoverbindungen wie Azobisisobutyronitril, anorganische Initiatoren wie die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt. Als Redox-Initiatoren verwendet man Kombinationen aus den genannten Initiatoren in Kombination mit Reduktionsmitteln wie Natriumsulfit, Natriumhydroxymethansulfinat, Ascorbinsäure. Die Reduktionsmittelmenge beträgt vorzugsweise 0.01 bis 5.0 Gew.-%, bezogen auf das Gesamtgewicht der Monomere.

Die Stabilisierung des Polymerisationsansatzes erfolgt mittels der genannten Schutzkolloide ohne zusätzliche Emulgatoren. Vorzugsweise wird der Schutzkolloid-Anteil dabei teilweise vorgelegt und teilweise nach Initiierung der Polymerisation zudosiert. Im allgemeinen wird in Gegenwart von 1 bis 25 Gew.-% Schutzkolloid, bezogen auf das Gesamtgewicht der Monomere, polymerisiert. Die Monomere können insgesamt vorgelegt werden, insgesamt zudosiert werden oder in Anteilen vorgelegt werden und der Rest nach der Initiierung der Polymerisation zudosiert werden. Der Anteil der nachvernetzenden Comonomere c) wird vorzugsweise insgesamt zudosiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen enthalten im allgemeinen 1 bis 25 Gew.-% Schutzkolloid, bezogen auf den Polymeranteil, und haben einen Feststoffgehalt von 30 bis 75 Gew.-%, vorzugsweise von 40 bis 65 Gew.-%.

Zur Herstellung der in Wasser redispergierbaren Polymerpulver werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zweioder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew.-%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel beträgt der Anteil an Schutzkolloid vor der Verdüsung der Dispersion 5 bis 25 Gew.-%, bezogen auf die polymeren Bestandteile der Dispersion.

Geeignete Verdüsungshilfen sind teilverseifte Polyvinylacetate; Polyvinylpyrrolidone; Polysaccharide in wasserlöslicher Form wie Stärken (Amylose und Amylopectin), modifizierte Stärken wie Stärkeether, beispielsweise Hydroxyalkyletherstärken; Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol%, einer Höppler-Viskosität von 1 bis 30 mPas, welche gegebenenfalls wie oben angegeben hydrophob modifiziert sein können.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm.

Zur Erhöhung der Wasserbeständigkeit der Verklebung können den Schutzkolloid-stabilisierten Polymerdispersionen bzw. Polymerpulvern noch 0.5 bis 10 Gew.-%, bezogen auf Polymer, wasserlösliche Metallsalze von einbasischen Säuren mit einem pKs unter 0 zugegeben werden. Besonders geeignet sind Salze von Al(III), Fe(III) und Zr(IV), beispielsweise Aluminiumnitrat, Eisenchlorid, Zirkonoxychlorid. Als Härter können auch in denselben Mengen freie Säuren mit einem pKs kleiner 0 eingesetzt werden. Beispiele hierfür sind Salzsäure, Salpetersäure, Perchlorsäure, Phosphorsäure oder deren Mischungen. Zur weiteren Verbesserung der Wasserfestigkeit können auch Vernetzungsmittel in einer Menge von 0.5 bis 10 Gew.-%, bezogen auf Polymer, zugegeben werden. Beispiel hierfür sind Polyisocyanate, Formaldehyd-Phenol-Harze oder maskierte Polyaldehyde, beispielsweise Bisulfitaddukte von Bialdehyden wie Glutardialdehydbisnatriumhydrogensulfit.

Die Klebemittel eignen sich zur Verklebung von porösen Substraten. Beispiele hierfür sind die Verklebung von Holz wie Holz-Holz-Verklebung, die Verklebung von Holz mit saugfähigen Substraten wie Estrich, insbesondere die Parkettverklebung. Weitere Anwendungen sind die wasserfeste Verklebung von Papier und Pappe, beispielsweise als Verpackungsklebstoff und Buchbindeklebstoff. Die Klebemittel eignen sich auch zur Verklebung von Fasermaterialien aus Natur- oder Kunstfaser, beispielsweise zur Herstellung von Holzfaserplatten, zur Verfestigung von Vliesstoffen von Natur- oder Kunstfasern, zur Herstellung von Formteilen aus Fasermaterialien sowie zur Herstellung von Vorstufen solcher Formteile, den sogenannten Halbzeugen (Waddings). Weitere Anwendungsbeispiele sind die Wattenbindung, beispielsweise von Polster-, Isolier- und Filterwatten, die Herstellung von Laminaten wie Dämmstoffen.
Die nachfolgenden Beispiele dienen der weiteren Erläuterung der Erfindung:

### Herstellung der Polymerdispersionen und Polymerpulver:

### Beispiel 1:

In einem Rührautoklaven mit 5 1 Inhalt wurden 1110 ml entionisiertes Wasser, 281 g einer 20 %-igen wäßrigen Lösung eines Polyvinylalkohols mit einem Hydrolysegrad von 88 Mol-%, einer Höpplerviskosität der 4 %-igen Lösung von 4 mPas (DIN 53015, Methode nach Höppler bei 20°C) und 39 g einer 48 %-igen wäßrigen Lösung von N-Methylolacrylamid (NMA) vorgelegt. Der pH-Wert wurde mit 10 %-iger Ameisensäure auf 4.0 bis 4.2 eingestellt. Anschließend wurde evakuiert, mit Stickstoff gespült, erneut evakuiert und ein Gemisch aus 112 g Styrol, 168 g 1,3-Butadien und 8 g tert.-Dodecylmercaptan eingesaugt. Nach Aufheizen auf 80°C wurde die Polymerisation durch gleichzeitiges Einfahren von zwei Katalysatorlösungen gestartet, von denen die erste aus 110 g entionisiertem Wasser und 15.5 g einer 40 %-igen wäßrigen tert.-Butylhydroperoxidlösung und die andere aus 116 g entionisiertem Wasser und 13 g Natriumformaldehydsulfoxylat bestand, wobei die Dosierung der beiden Katalysatorlösungen mit gleicher Zulaufgeschwindigkeit (18 ml/h) erfolgte. Nach Polymerisationsbeginn wurde mit der dosierten Zugabe eines Gemischs von 951 g 1,3-Butadien, 634 g Styrol und 9 g tert.-Dodecylmercaptan mit einer Rate von 5.3 g/min begonnen. Gleichzeitig wurden 619 g einer 20 %-igen wäßrigen Lösung eines Polyvinylalkohols mit einem Hydrolysegrad von 88 Mol-%, einer Höpplerviskosität der 4 %-igen Lösung von 4 mPas (DIN 53015, Methode nach Höppler bei 20°C), mit einer Rate von 0.82 g/min, zudosiert. Nach Ende des Monomer- und Polyvinylalkoholzulaufs wurde noch 2 h bei 80°C mit unveränderter Zulaufgeschwindigkeit der Initiatorlösung nachpolymerisiert, anschließend wurde der Zulauf der Initiatorlösungen beendet und abgekühlt.

Man erhielt eine stabile, relativ feinteilige (Coulter LS 230; Dw = 0.361 µm) und koagulatfreie Dispersion, die bei einem Festkörpergehalt von 46.9 % eine Viskosität (Brookfield-Viskosimeter, 20°C, 20 Upm) von 8100 mPas aufwies.
Herstellung des Redispersionspulvers:
400 Gew.-Teile der Dispersion wurden mit 200 Gew.-Teilen einer 10.3 %-igen Lösung eines Polyvinylalkohols (Hydrolysegrad 88 Mol%, Viskosität der 4 %-igen Lösung 13 mPas), 0.84 Gew.-Teilen Entschäumer und 135 Gew.-Teilen Wasser versetzt und gründlich gemischt. Die Dispersion wurde durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet.
Das erhaltene trockene Pulver wurde mit 10 % handelsüblichem Antiblockmittel (Gemisch aus Calcium-Magnesium-Carbonat und Magnesiumhydrosilikat) versetzt.

### Beispiel 2:

Die Herstellung der Dispersion erfolgte analog Beispiel 1, unter Einsatz von insgesamt 78 g einer 48 %-igen wäßrigen Lösung von N-Methylolacrylamid.
Man erhielt eine stabile, relativ feinteilige (Coulter LS 230; Dw = 0.536 µm) und koagulatfreie Dispersion, die bei einem Festkörpergehalt von 49.0 % eine Viskosität (Brookfield-Viskosimeter, 20°C, 20 Upm) von 24200 mPas aufwies.
Alle anderen Maßnahmen (zur Herstellung des Dispersionspulvers) entsprachen Beispiel 1.

### Beispiel 3:

Die Herstellung der Dispersion erfolgte analog Beispiel 1, unter Einsatz von insgesamt 39 g einer 48 %-igen wäßrigen Lösung von N-Methylolacrylamid, wobei die gesamte wäßrige NMA-Lösung gleichzeitig mit den dosierten Monomeren während der Polymerisation zudosiert wird.
Man erhielt eine stabile, relativ feinteilige (Coulter LS 230; Dw = 0.471 µm) und koagulatfreie Dispersion, die bei einem Festkörpergehalt von 49.5 % eine Viskosität (Brookfield-Viskosimeter, 20°C, 20 Upm) von 7360 mPas aufwies.
Alle anderen Maßnahmen (zur Herstellung des Dispersionspulvers) entsprachen Beispiel 1.

### Beispiel 4:

Die Herstellung der Dispersion erfolgte analog Beispiel 1, unter Einsatz von insgesamt 78 g einer 48 %-igen wäßrigen Lösung von N-Methylolacrylamid, wobei die gesamte wäßrige NMA-Lösung gleichzeitig mit den dosierten Monomeren während der Polymerisation zudosiert wurde.
Man erhielt eine stabile, relativ feinteilige (Coulter LS 230; Dw = 0.506 µm) und koagulatfreie Dispersion, die bei einem Festkörpergehalt von 49.8 % eine Viskosität (Brookfield-Viskosimeter, 20°C, 20 Upm) von 14370 mPas aufwies.
Alle anderen Maßnahmen (zur Herstellung des Dispersionspulvers) entsprachen Beispiel 1.

### Beispiel 5:

Die Herstellung der Dispersion erfolgte analog Beispiel 1, wobei anstatt NMA 22 g einer 85 %-igen wäßrigen Lösung von N-Isobutoxymethylacrylamid (IBMA) eingesetzt wurde.
Man erhielt eine stabile, relativ feinteilige (Coulter LS 230; Dw = 0.635 µm) und koagulatfreie Dispersion, die bei einem Festkörpergehalt von 49.3 % eine Viskosität (Brookfield-Viskosimeter, 20°C, 20 Upm) von 6300 mPas aufwies.
Alle anderen Maßnahmen (zur Herstellung des Dispersionspulvers) entsprachen Beispiel 1.

### Beispiel 6:

Die Herstellung der Dispersion erfolgte analog Beispiel 1, wobei anstatt NMA 44 g einer 85 %-igen wäßrigen Lösung von N-Isobutoxymethylacrylamid (IBMA) eingesetzt wurde.
Man erhielt eine stabile, relativ feinteilige (Coulter LS 230; Dw = 0.515 µm) und koagulatfreie Dispersion, die bei einem Festkörpergehalt von 49.3 % eine Viskosität (Brookfield-Viskosimeter, 20°C, 20 Upm) von 18300 mPas aufwies.
Alle anderen Maßnahmen (zur Herstellung des Dispersionspulvers) entsprachen Beispiel 1.

### Beispiel 7:

Die Herstellung der Dispersion erfolgte analog Beispiel 3, wobei anstatt der wäßrigen NMA-Lösung 22 g einer 85 %-igen wäßrigen Lösung von N-Isobutoxymethylacrylamid (IBMA) gleichzeitig mit den dosierten Monomeren während der Polymerisation zudosiert wurde.
Man erhielt eine stabile, relativ feinteilige (Coulter LS 230; Dw = 0.456 µm) und koagulatfreie Dispersion, die bei einem Festkörpergehalt von 49.7 % eine Viskosität (Brookfield-Viskosimeter, 20°C, 20 Upm) von 5420 mPas aufwies.
Alle anderen Maßnahmen (zur Herstellung des Dispersionspulvers) entsprachen Beispiel 1.

### Beispiel 8:

Die Herstellung der Dispersion erfolgte analog Beispiel 3, wobei anstatt der wäßrigen NMA-Lösung 44 g einer 85 %-igen wäßrigen Lösung von N-Isobutoxymethylacrylamid (IBMA) gleichzeitig mit den dosierten Monomeren während der Polymerisation zudosiert wird.
Man erhielt eine stabile, relativ feinteilige (Coulter LS 230; Dw = 0.493 µm) und koagulatfreie Dispersion, die bei einem Festkörpergehalt von 49.5 % eine Viskosität (Brookfield-Viskosimeter, 20°C, 20 Upm) von 10620 mPas aufwies.
Alle anderen Maßnahmen (zur Herstellung des Dispersionspulvers) entsprachen Beispiel 1.

### Vergleichsbeispiel 9:

Die Herstellung der Dispersion erfolgte analog Beispiel 1 wobei weder NMA noch IBMA eingesetzt wurde. Alle anderen Maßnahmen entsprachen Beispiel 1.
Man erhielt eine stabile, grobteilige (Coulter LS 230; Dw = 2.63 µm) und koagulatfreie Dispersion, die bei einem Festkörpergehalt von 49.8 % eine Viskosität (Brookfield-Viskosimeter, 20°C, 20 Upm) von 18400 mPas aufwies.

### Anwendungstechnische Prüfung:

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehält verdünnt und die Absitzhöhe an Feststoff von 100 ml dieser Redispersion in eine graduierte Röhre gefüllt und das Absetzen nach 1 Stunde und 24 Stunden gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 =: sehr gute Blockstabilität
- 2 =: gute Blockstabilität
- 3 =: befriedigende Blockstabilität
- 4 =: nicht blockstabil, Pulver nach Zerdrücken nicht mehr rieselfähig.

### Klebefestigkeit nach DIN EN 204/205:

In sämtlichen in Tabelle 1 aufgeführten Beispielen wurde die Klebefestigkeit nach Zugabe von 2.5 Gew.-% einer Lösung von 50 %-iger AlCl₃ * 6 H₂O in Wasser zu den Polymerdispersionen der Beispiele bestimmt.
Die Probekörper wurden gemäß DIN EN 205 hergestellt. Hierzu wurden jeweils zwei je 5 mm dicke, 130 mm breite und 600 mm lange Buchenholzplatten mit der zu testenden Klebemittel-Dispersion unter gleichmäßig über die Klebefläche verteilem Druck miteinander verklebt, die verklebten Platten in jeweils 150 mm lange Prüfkörper aufgeteilt und diese gemäß DIN EN 204 gelagert.
Für die Prüfung zur Zuordnung in die Beanspruchungsgruppe D1 wurden die Probekörper nach der Verleimung 7 Tage bei Normalklima (23°C, 50 % Luftfeuchtigkeit) gelagert.
Für die Prüfung zur Zuordnung in die Beanspruchungsgruppe D2 wurden die Probekörper nach der Verleimung 7 Tage bei Normalklima (23°C, 50 % Luftfeuchtigkeit), anschließend 3 Stunden in 23°C kaltem Wasser und schließlich weitere 7 Tage in Normalklima gelagert.
Nach der Lagerung wurde mit den Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebefestigkeit T errechnet sich gemäß DIN EN 205 aus T = F_{Max}/A, wobei A die geklebte Prüffläche in mm² ist.
Die Ergebnisse der Prüfung der Klebefestigkeit sind in Tabelle 1 zusammengefaßt.

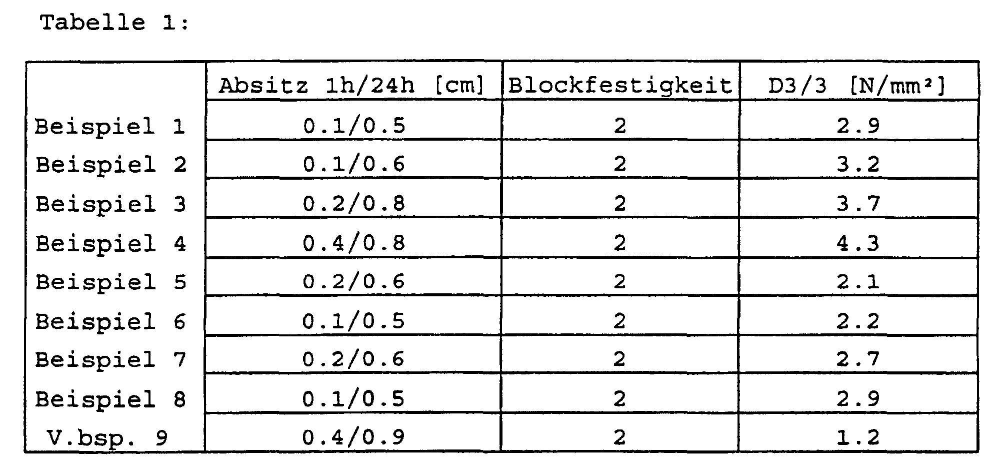

## Patentansprüche

1. Verwendung von Schutzkolloid-stabilisierten Vinylaromat-1,3-Dien-Mischpolymerisaten, mit einer Glasübergangstemperatur Tg von -70°C bis +100°C, in Form deren wäßriger Polymerdispersionen oder in Wasser redispergierbaren Polymerpulvern als Klebemittel für poröse Substrate, wobei die Polymerdispersionen und die Polymerpulver durch Emulsionspolymerisation eines Gemisches enthaltend
a) 20 bis 80 Gew.-% eines oder mehrerer Vinylaromaten,
b) 19.9 bis 79.9 Gew.-% eines oder mehrerer 1,3-Diene,
c) 0.1 bis 15 Gew.-% eines oder mehrerer Comonomere aus der Gruppe umfassend N-Methylolacrylamid, N-Methylolmethacrylamid sowie der N-(Alkoxymethyl)-Acrylamide und N-(Alkoxymethyl)-Methacrylamide mit einem C₁- bis C₆-Alkylrest, wobei sich die Angaben in Gew.-% auf 100 Gew.-% aufaddieren,
in Gegenwart von einem oder mehreren Schutzkolloiden und unter Ausschluß von Emulgator, und gegebenenfalls Trocknung der damit erhaltenen wässrigen Polymerdispersion, erhalten werden.

2. Verwendung nach Anspruch 1, **dadurch gekennzeichnet, daß** als Schutzkolloide ein oder mehrere Polyvinylalkohole, Stärken, modifizierte Stärken wie Stärkeether, Dextrine und Cyclodextrine, Cellulosen und deren Carboxymethyl-, Methyl-, Hydroxyethyl-, Hydroxypropyl-Derivate, Poly(meth)-acrylsäure, Poly(meth)acrylamid, Melaminformaldehydsulfonate, Naphthalinformaldehydsulfonate eingesetzt werden.

3. Verwendung nach Anspruch 1 bis 2, **dadurch gekennzeichnet, daß** als Schutzkolloide ein oder mehrere, gegebenenfalls hydrophob modifizierte, Polyvinylalkohole mit einem Hydrolysegrad von 80 bis 95 Mol% und einer Höpplerviskosität, in 4 %-iger wässriger Lösung von 1 bis 30 mPas eingesetzt werden.

4. Verwendung nach Anspruch 1 bis 3, **dadurch gekennzeichnet, daß** das Klebemittel zur Verklebung von Holz verwendet wird.

5. Verwendung nach Anspruch 1 bis 3, **dadurch gekennzeichnet, daß** das Klebemittel zur Verklebung von Papier und Pappe verwendet wird.

6. Verwendung nach Anspruch 1 bis 3, **dadurch gekennzeichnet, daß** das Klebemittel zur Verklebung von Fasermaterialien aus Natur- oder Kunstfaser verwendet wird.

## Revendications

1. Utilisation de copolymères de composé vinyl-aromatique/1,3-diène stabilisés par des colloïdes protecteurs, présentant une température de transition vitreuse Tv de -70°C à +100°C, sous forme de leurs dispersions polymères aqueuses ou de poudres polymères redispersables dans l'eau en tant qu'adhésifs pour des substrats poreux, les dispersions polymères et les poudres polymères étant obtenues par polymérisation en émulsion d'un mélange comprenant
a) de 20 à 80 % en poids d'un ou de plusieurs composés vinylaromatiques,
b) de 19,9 à 79,9 % en poids d'un ou de plusieurs 1,3-diènes,
c) de 0,1 à 15 % en poids d'un ou de plusieurs comonomères parmi le groupe constitué du N-méthylolacrylamide, du N-méthylolméthacrylamide ainsi que des N-(alcoxyméthyl)acrylamides et des N-(alcoxyméthyl)méthacrylamides renfermant un radical alkyle en C₁ à C₆, la somme des données en % en poids étant de 100 % en poids,
en présence d'un ou de plusieurs colloïdes protecteurs et à l'exclusion d'un émulsifiant, et en séchant éventuellement la dispersion polymère aqueuse ainsi obtenue.

2. Utilisation selon la revendication 1, **caractérisée en ce que** l'on utilise, en tant que colloïdes protecteurs, un ou plusieurs alcools polyvinyliques, des amidons, des amidons modifiés tels que des éthers d'amidons, des dextrines et des cyclodextrines, des celluloses et leurs dérivés carboxyméthyliques, méthyliques, hydroxyéthyliques et hydroxypropyliques, un acide poly(méth)acrylique, un poly(méth)acrylamide, des sulfonates de mélamine-formaldéhyde et des sulfonates de naphtalène-formaldéhyde.

3. Utilisation selon les revendications 1 à 2, **caractérisée en ce que** l'on utilise, en tant que colloïdes protecteurs, un ou plusieurs alcools polyvinyliques éventuellement modifiés de façon hydrophobe, présentant un degré d'hydrolyse de 80 à 95 % moles et une viscosité de Höppler, dans une solution aqueuse à 4 %, de 1 à 30 mPas.

4. Utilisation selon les revendications 1 à 3, **caractérisée en ce que** l'adhésif est utilisé pour coller du bois.

5. Utilisation selon les revendications 1 à 3, **caractérisée en ce que** l'adhésif est utilisé pour coller du papier et du carton.

6. Utilisation selon les revendications 1 à 3, **caractérisée** en que l'adhésif est utilisé pour coller des matières fibreuses en fibre naturelle ou synthétique.

## Claims

1. Use of vinylaromatic/1,3-diene copolymers stabilized with protective colloids, having a glass transition temperature Tg of -70°C to +100°C, and in the form of their aqueous polymer dispersions or water-redispersible polymer powders as adhesives for porous substrates, the polymer dispersions and the polymer powders being obtained by emulsion polymerization of a mixture comprising
a) 20 to 80% by weight of one or more vinylaromatics,
b) 19.9 to 79.9% by weight of one or more 1,3-dienes,
c) 0.1 to 15% by weight of one or more comonomers from the group consisting of N-methylolacrylamide, N-methylolmethacrylamide and the N-(alkoxymethyl)-acrylamides and N-(alkoxymethyl)methacrylamides with a C₁- to C₆-alkyl radical, the data in % by weight adding up to 100% by weight,
in the presence of one or more protective colloids and with the exclusion of emulsifier, and optionally drying the aqueous polymer dispersion obtained by this process.

2. Use according to Claim 1, **characterized in that** one or more polyvinyl alcohols, starches, modified starches, such as starch ethers, dextrins and cyclodextrins, celluloses and carboxymethyl, methyl, hydroxyethyl and hydroxypropyl derivatives thereof, poly(meth)acrylic acid, poly(meth)acrylamide, melamine-formaldehyde sulphonates and naphthalene-formaldehyde sulphonates are employed as the protective colloids.

3. Use according to Claims 1 to 2, **characterized in that** one or more optionally hydrophobically modified polyvinyl alcohols with a degree of hydrolysis of 80 to 95 mol% and a Höppler viscosity in 4% strength aqueous solution of 1 to 30 mPas are employed as the protective colloids.

4. Use according to Claims 1 to 3, **characterized in that** the adhesive is used for gluing wood.

5. Use according to Claims 1 to 3, **characterized in that** the adhesive is used for gluing paper and cardboard.

6. Use according to Claims 1 to 3, **characterized in that** the adhesive is used for gluing fibre materials of natural or synthetic fibre.
